# EUROPÄISCHE PATENTSCHRIFT

(11) **EP 2 835 044 B1**
(45) Veröffentlichungstag und Bekanntmachung des Hinweises auf die Patenterteilung: **12.12.2018**
(21) Anmeldenummer: 14002334.2
(22) Anmeldetag: 08.07.2014
(51) Int. Cl.: B60B 11/08, A01D 34/10, B62D 51/06, B60B 37/10, B60B 37/12, B62D 13/06

(54) **Einachsiges Fahrzeug**
Single axle vehicle
Véhicule à un seul essieu

(30) Priorität: 07.08.2013 AT 6332013
(43) Veröffentlichungstag der Anmeldung: 11.02.2015
(73) Patentinhaber: Stöckl, Friedrich, 6283 Hippach (AT)
(72) Erfinder: Stöckl, Lukas, 6283 Hippach (AT)
(74) Vertreter: Torggler & Hofinger Patentanwälte

(56) Entgegenhaltungen:
- EP-A1- 1 731 014
- EP-A2- 0 054 875
- WO-A1-95/08254
- CH-A5- 684 770
- DE-A1- 2 838 199
- DE-A1- 19 501 512
- DE-A1-102004 029 832
- DE-A1-102007 026 610
- DE-A1-102009 032 754
- DE-A1-102010 019 480
- JP-U- S6 172 137
- US-A- 4 076 264
- US-A1- 2009 020 983

## Beschreibung

Die vorliegende Erfindung betrifft ein einachsiges Fahrzeug mit den Merkmalen des Oberbegriffs des Anspruchs 1.

Derartige Fahrzeuge kommen vor allem als Einachsschlepper zum Einsatz und dienen häufig der Lagerung einer Mähvorrichtung (das gesamte Fahrzeug mit Mähvorrichtung wird dann häufig als Motormäher bezeichnet).

Problematisch bei gattungsgemäßen Fahrzeugen ist die Tatsache, dass diese primär in unbefestigtem Gelände eingesetzt werden. Vor allem bei unebenem Untergrund kann es zu einem unzureichenden Kontakt zwischen den Rädern und dem Untergrund kommen.

Die JP S61 72137 U zeigt ein einachsiges Fahrzeug mit den Merkmalen des Oberbegriffs des Anspruchs 1.

Aufgabe der Erfindung ist es, ein gattungsgemäßes Fahrzeug bereit zu stellen, welches sich bei unebenem Untergrund durch einen verbesserten Kontakt zwischen den Rädern und dem Untergrund auszeichnet.

Diese Aufgabe wird durch ein Fahrzeug mit den Merkmalen des Anspruchs 1 gelöst.

Dadurch, dass zwischen jedem Rad und der Fahrzeugachse ein Gelenk vorgesehen ist, welches ein Verschwenken jedes Rades um eine quer zur Fahrzeugachse liegende - vorzugsweise rechtwinklig zur Fahrzeugachse und in Fahrtrichtung verlaufende - Schwenkachse gestattet, vergrößert sich bei einem unebenen Untergrund die Kontaktfläche zwischen den Rädern und dem Untergrund. Das Rad kann sich an Unebenheiten des Untergrunds anpassen. Das Gelenk ist passiv ausgebildet, d. h. die Schwenkbewegung wird rein durch den Einfluss des Untergrundes hervor gerufen. Das Fahrzeug muss keine Energie für die Schwenkbewegung aufwenden.

Vorteilhafte Ausführungsformen der Erfindung sind in den abhängigen Ansprüchen definiert.

Die Erfindung kommt vorzugsweise bei Einachsschleppern zum Einsatz. Besonders bevorzugt ist die Anordnung einer Mähvorrichtung am Fahrzeug vorgesehen. Selbstverständlich können auch andere bekannte Anbauvorrichtungen zum Einsatz kommen.

Die Erfindung kommt besonders bevorzugt bei als Walzen ausgebildeten Rädern zum Einsatz. Besonders bevorzugt sind solche Walzen, bei denen Breite und Durchmesser in einem Verhältnis annähernd gleich oder größer als 1 zueinander stehen. Die Räder können (ob als Walzen ausgebildet oder nicht) ohne oder mit Bereifungen eingesetzt werden. Die Walzen können als Stachelwalzen ausgebildet sein.

Weitere Vorteile und Einzelheiten der Erfindung ergeben sich anhand der Figuren und der dazu gehörigen Figurenbeschreibung. Es zeigen:
- Fig. 1a, 1b, und 1c: ein Ausführungsbeispiel eines erfindungsgemäßen Fahrzeugs und
- Fig. 2a, 2b und 2c: eine Detaildarstellung zur Fig. 1 im Bereich eines der Räder des Fahrzeugs.

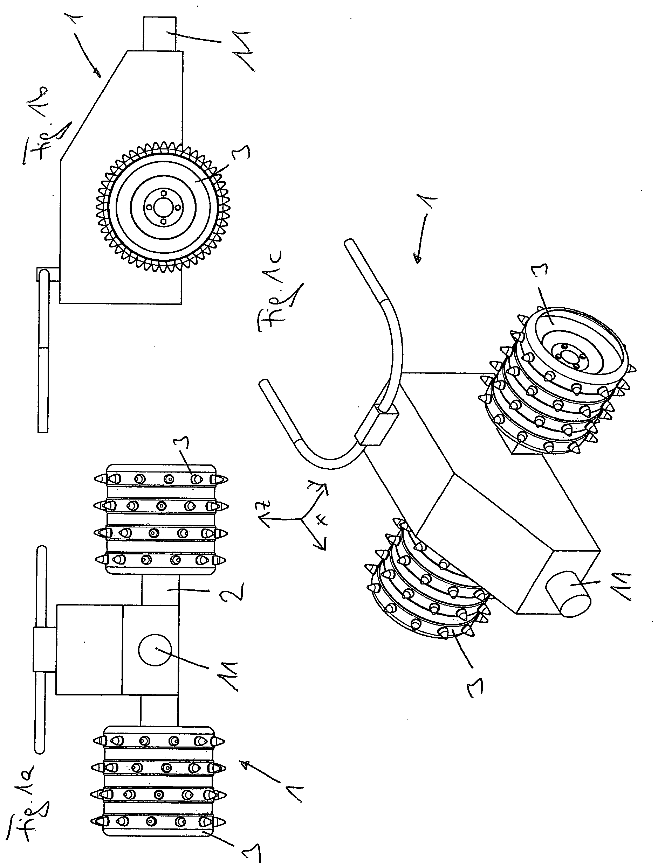

Die Figuren 1a bis 1c zeigen ein als Motormäher ausgebildetes erfindungsgemäßes Fahrzeug 1. Am als Einachsschlepper ausgebildeten Fahrzeug 1 kann zum Beispiel eine Mähvorrichtung angeordnet werden. Allgemein dient der Anschlussflansch 11 dem Antrieb von Anbaugeräten.

Im Folgenden wird als x-Achse jene Achse bezeichnet, die in Fahrtrichtung des Fahrzeugs 1 verläuft. Als y-Achse wird jene Achse bezeichnet, die rechtwinklig zur Fahrtrichtung und bei horizontalem Untergrund horizontal verläuft. Als z-Achse wird jene Achse bezeichnet, die rechtwinklig zur x-Achse und zur y-Achse verläuft.

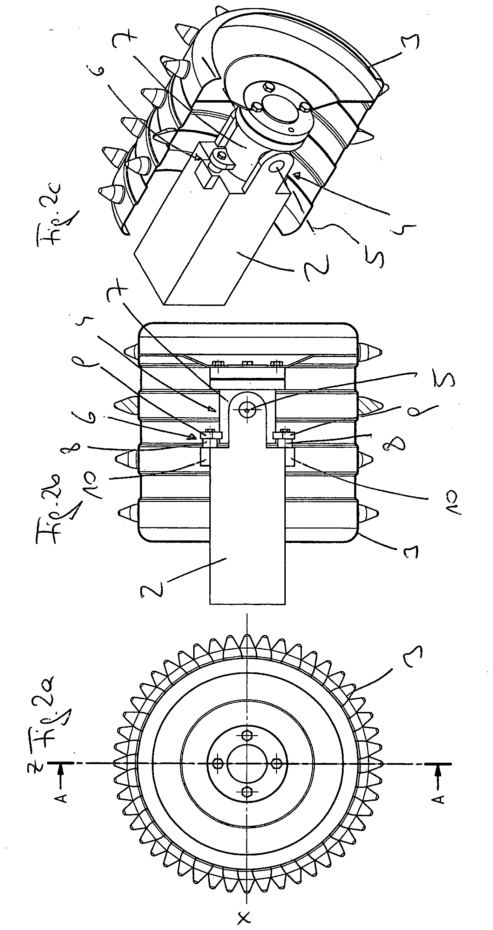

Die Figuren 2a bis 2c zeigen die Lagerung eines der Räder 3 an der Fahrzeugachse 2 (verläuft entlang der y-Achse) über ein Gelenk 4, welches ein Verschwenken jedes Rades 3 um eine rechtwinklig zur Fahrzeugachse 2 und in Fahrtrichtung liegende Schwenkachse 5 (verläuft entlang der x-Achse) gestattet.

Die Schnittdarstellung der Figuren 2b und 2c erfolgt entlang der Achse A-A der Figur 2a.

Im gezeigten Ausführungsbeispiel erfolgt der Antrieb jedes Rades 3 unabhängig vom anderen Rad 3 durch einen über das Gelenk 4 an der Fahrzeugachse 2 angeordneten Radnabenmotor 7. Alternativ wäre natürlich auch ein Antrieb der Räder 3 über eine Kardanwelle oder Kegelräder möglich.

Das Gelenk 4 ist hier als Achszapfgelenk ausgebildet.

Zur Abfederung einer Verschwenkbewegung des Rades 3 um die Schwenkachse 5 ist hier ein flexibles Element 6 in Form von zwei Feder-Dämpf-Elementen 8 vorgesehen. Diese sind über Laschen 9 am Radnabenmotor 7 und über Anschläge 10 an der Fahrzeugachse 2 befestigt. Durch die innere Reibung der Feder-Dämpf-Elemente 8, die vorzugsweise aus Kunststoff bestehen, ergibt sich eine Dämpfwirkung. Natürlich könnten auch gesonderte Dämpfer vorgesehen sein.

Im gezeigten Ausführungsbeispiel verläuft die Schwenkachse 5 rechtwinklig zur Fahrzeugachse 2 und horizontal. Abweichungen sind konstruktiv möglich.

Im gezeigten Ausführungsbeispiel schneiden sich die Fahrzeugachse 2 und die Schwenkachse 5. Dies ist nicht unbedingt erforderlich. Zum Beispiel wäre ein Versatz zwischen Fahrzeugachse 2 und Schwenkachse 5 denkbar.

Die Räder 3 sind als Walzen (hier: als Stachelwalzen) ausgebildet. Gerade die bei den Walzen übliche breite Ausbildung der Räder 3 macht sich die Erfindung besonders zu Nutze. Bisher waren vor allem Walzen dafür bekannt, aufgrund ihrer in Bezug auf den Durchmesser großen Breite bei unebenem Untergrund eine zu geringe Kontaktfläche zum Untergrund aufzuweisen.

## Patentansprüche

1. Einachsiges Fahrzeug (1), insbesondere Einachsschlepper, mit einer Fahrzeugachse (2), an welcher zwei Räder (3) drehbar gelagert sind, wobei zwischen jedem Rad (3) und der Fahrzeugachse (2) ein Gelenk (4) vorgesehen ist, welches ein Verschwenken jedes Rades (3) um eine quer zur Fahrzeugachse (2) verlaufende Schwenkachse (5) zur Anpassung an Unebenheiten des Untergrunds gestattet, **dadurch gekennzeichnet, dass** das Gelenk (4) passiv ausgebildet ist, sodass die Schwenkbewegung jedes Rades (3) rein durch den Einfluss des Untergrundes hervor gerufen wird.

2. Einachsiges Fahrzeug (1) nach Anspruch 1, **dadurch gekennzeichnet, dass** die Schwenkachse (5) in einem Bereich von +/- 45° in Bezug auf die Fahrtrichtung des Fahrzeugs (1) verläuft.

3. Einachsiges Fahrzeug (1) nach Anspruch 1 oder 2, **dadurch gekennzeichnet, dass** die Schwenkachse (5) wenigstens annähernd horizontal verläuft.

4. Einachsiges Fahrzeug (1) nach einem der Ansprüche 1 bis 3, **dadurch gekennzeichnet, dass** die Schwenkachse (5) wenigstens annähernd rechtwinklig zur Fahrzeugachse (2) verläuft.

5. Einachsiges Fahrzeug (1) nach einem der Ansprüche 1 bis 4, **dadurch gekennzeichnet, dass** die Schwenkachse (5) innerhalb des Rades (3) verläuft.

6. Einachsiges Fahrzeug (1) nach einem der Ansprüche 1 bis 5, **dadurch gekennzeichnet, dass** zwischen jedem Rad (3) und der Fahrzeugachse (2) ein flexibles Element (6) zum Abfedern eines Verschwenkens des jeweiligen Rades (3) um die Schwenkachse (5) angeordnet ist.

7. Einachsiges Fahrzeug (1) nach Anspruch 1 bis 6, **dadurch gekennzeichnet, dass** Dämpfer für die Räder (3) vorgesehen sind.

8. Einachsiges Fahrzeug (1) nach wenigstens einem der Ansprüche 1 bis 7, **dadurch gekennzeichnet, dass** das Gelenk (4) ein Achszapfgelenk umfasst.

9. Einachsiges Fahrzeug (1) nach wenigstens einem der Ansprüche 1 bis 8, **dadurch gekennzeichnet, dass** jedes Rad (3) über einen Radnabenmotor (7) mit dem jeweiligen Gelenk (4) verbunden ist.

10. Einachsiges Fahrzeug (1) nach wenigstens einem der Ansprüche 1 bis 9, **dadurch gekennzeichnet, dass** die Räder (3) als Walzen, vorzugsweise als Stachelwalzen, ausgebildet sind.

11. Einachsiges Fahrzeug (1) nach wenigstens einem der Ansprüche 1 bis 6, **dadurch gekennzeichnet, dass** am Fahrzeug (1) ein Mähvorrichtung angeordnet ist.

12. Einachsiges Fahrzeug (1) nach Anspruch 11, **dadurch gekennzeichnet, dass** das Fahrzeug (1) einen Anschlussflansch (11) für den Antrieb von Anbaugeräten aufweist.

## Claims

1. A single-axle vehicle (1), in particular single-axle tractor, having a vehicle axle (2) on which two wheels (3) are rotatably mounted, wherein there is provided between each wheel (3) and the vehicle axle (2) a joint (4) for permitting a pivoting movement of each wheel (3) about a pivot axle (5) extending transverse to the vehicle axle (2) in order to adapt to unevenness of the ground, **characterized in that** the joint (4) is configured to be passive, so that the pivoting movement of each wheel (3) is caused exclusively by the influence of the ground.

2. The single-axle vehicle (1) according to claim 1, **characterized in that** the pivot axle (5) extends in a range of +/- 45° in relation to the driving direction of the vehicle (1).

3. The single-axle vehicle (1) according to claim 1 or 2, **characterized in that** the pivot axle (5) extends at least approximately horizontal.

4. The single-axle vehicle (1) according to one of the claims 1 to 3, **characterized in that** the pivot axle (5) extends at least approximately at a right angle to the vehicle axle (2).

5. The single-axle vehicle (1) according to one of the claims 1 to 4, **characterized in that** the pivot axle (5) extends within the wheel (3).

6. The single-axle vehicle (1) according to one of the claims 1 to 5, **characterized in that** a flexible element (6) for cushioning a pivoting movement of the respective wheel (3) about the pivot axle (5) is arranged between each wheel (3) and the vehicle axle (2).

7. The single-axle vehicle (1) according to one of the claims 1 to 6, **characterized in that** dampers are provided for the wheels (3).

8. The single-axle vehicle (1) according to at least one of the claims 1 to 7, **characterized in that** the joint (4) includes a journal pin joint.

9. The single-axle vehicle (1) according to at least one of the claims 1 to 8, **characterized in that** each wheel (3) is connected to the respective joint (4) by a wheel hub motor (7).

10. The single-axle vehicle (1) according to at least one of the claims 1 to 9, **characterized in that** the wheels (3) are formed as rollers, preferably spiked rollers.

11. The single-axle vehicle (1) according to at least one of the claims 1 to 6, **characterized in that** a mowing device is arranged on the vehicle (1).

12. The single-axle vehicle (1) according to claim 11, **characterized in that** the vehicle (1) has a connection flange (11) in order for attachment units to be driven.

## Revendications

1. Véhicule à un essieu (1), en particulier motoculteur, doté d'un essieu (2), sur lequel deux roues (3) sont agencées en rotation, dans lequel une articulation est prévue entre chaque roue (3) et l'essieu (2), laquelle permet un pivotement de chaque roue (3) autour d'un axe de pivot (5) transversal à l'essieu (2) pour s'adapter aux inégalités du sol, **caractérisé en ce que** l'articulation (4) est conçue pour être passive, de sorte que le mouvement de pivot de chaque roue (3) est provoqué purement par l'influence du sol.

2. Véhicule à un essieu (1) selon la revendication 1, **caractérisé en ce que** l'axe de pivot (5) s'étend dans un intervalle de +/- 45° par rapport à la direction de mouvement du véhicule (1).

3. Véhicule à un essieu (1) selon la revendication 1 ou 2, **caractérisé en ce que** l'axe de pivot (5) s'étend au moins approximativement de manière horizontale.

4. Véhicule à un essieu (1) selon l'une des revendications 1 à 3, **caractérisé en ce que** l'axe de pivot (5) s'étend au moins approximativement à angle droit par rapport à l'essieu (2).

5. Véhicule à un essieu (1) selon l'une des revendications 1 à 4, **caractérisé en ce que** l'axe de pivot (5) s'étend à l'intérieur de la roue (3).

6. Véhicule à un essieu (1) selon l'une des revendications 1 à 5, **caractérisé en ce qu'**entre chaque roue (3) et l'essieu (2) est agencé un élément flexible (6) destiné à amortir un pivotement de cette roue (3) autour de l'axe de pivot (5).

7. Véhicule à un essieu (1) selon la revendication 1 à 6, caractérisé en ce des amortisseurs sont prévus pour les roues (3).

8. Véhicule à un essieu (1) selon au moins une des revendications 1 à 7, **caractérisé en ce que** l'articulation (4) comprend une articulation à tourillon.

9. Véhicule à un essieu (1) selon au moins une des revendications 1 à 8, **caractérisé en ce que** chaque roue (3) est reliée à l'articulation (4) respective au moyen d'un moteur de moyeu de roue (7).

10. Véhicule à un essieu (1) selon au moins une des revendications 1 à 9, **caractérisé en ce que** les roues (3) sont conçues comme des rouleaux, de préférence comme des rouleaux à pointes.

11. Véhicule à un essieu (1) selon au moins une des revendications 1 à 6, **caractérisé en ce qu'**un dispositif de fauchage est agencé sur le véhicule (1).

12. Véhicule à un essieu (1) selon la revendication 11, **caractérisé en ce que** le véhicule (1) comporte une bride de raccordement (11) pour l'entraînement d'accessoires.
